# EUROPEAN PATENT APPLICATION

(11) **EP 1 178 474 A1**
(43) Date of publication of application: **06.02.2002**
(21) Application number: 00925580.3
(22) Date of filing: 10.05.2000
(51) Int. Cl.: G11B 7/135

(54) **OPTICAL HEAD**

(30) Priority: 11.05.1999 JP 12960199
(71) Applicant: Matsushita Electric Industrial Co., Ltd., Kadoma-shi, Osaka 571-8501 (JP)
(72) Inventor: OGATA, Daisuke, Amagasaki-shi Hyogo 661-0035 (JP); YASUDA, Katsuhiko, Neyagawa-shi Osaka 572-0004 (JP); YASUDA, Akihiro, Moriguchi-shi Osaka 572-0046 (JP)
(74) Representative: Grünecker, Kinkeldey, Stockmair & Schwanhäusser Anwaltssozietät
(86) International application number: JP0002968
(87) International publication number: WO0068943

(57) **Abstract**

In an optical system wherein optical systems corresponding to optical discs of differing standards are combined by sharing some parts, in the case that a skew adjustment is optimally carried out on the objective lens for one medium, the difference in the best tilt angle due to the coma aberration occurring for the other medium is reduced.

The position of the second light source in the optical axis direction is set on the side that is farther away from the objective lens than from the position where the wave front aberration becomes of the minimum. Thereby, the amount of increase of the coma aberration is reduced when the skew angle of the objective lens changes in accordance with the second optical information recording medium. In addition, more preferably, the light source is set at the position where the coma aberration does not change in accordance with the skew angle of the objective lens . This position is located between the position where the wave front aberration is of the minimum and the position where the optical system becomes an infinite system so that the increase of the dimensions of the optical head can be controlled and the increase of difference of the working distances can be controlled in accordance with the two optical information recording media.

## Description

### Technical Field

The present invention relates to a (recording/reproduction) optical head in a condensing optical system for recording information on an information recording surface of an optical information recording medium or for reproducing information from the information recording surface by condensing a light flux emitted from a light source onto the information recording surface via a transparent substrate of the information recording medium.

### Background Technology

In recent years because of increases in recording density and in usage of recordable media, the standards of optical discs have increased so that it has become necessary to change the numerical aperture (hereinafter referred to simply as NA) of objective lenses or the wavelength utilized in an optical system for recording and/or reproduction (hereinafter referred to simply as an optical system) in order to correspond to the difference of the thickness of the disc substrate or to the wavelength dependency of the reflectance.

For example, the thickness of the CD substrate is 1.2 mm while that of the DVD is 0.6 mm. In addition, as for the reflectance of the disc recording material utilized in the CD-R is 65%, or more, for the wavelength of 780 nm to 830 nm while it drops to 20%, or less, for the wavelength of 635 nm to 650 nm.

Accordingly, in general, in the optical system for DVD, a light source wavelength of 635 nm to 650 nm and an NA of 0.6 of the objective lens are utilized while in the optical system for the CD-R, a light source wavelength of 780 nm to 830 nm and an NA of 0.45 of the objective lens are utilized.

Therefore, it is desirable for optical discs of which the corresponding optical systems differ in such a manner to be able to record or reproduce with the same optical disc apparatus and, at the same time, it is required for the optical disc apparatus to be miniaturized and to be reduced in cost. That is to say, a system is proposed where as many parts as possible are used in common for optical systems corresponding to optical discs of differing standards.

As an exemplary system thereof, there is the optical head as shown in the Japanese unexamined patent publication H8(1996)-55363. In this optical head the condensing lens for condensing a light flux emitted from the light source and the objective lens for conversion of the light flux onto the information recording surface of an optical disc are, respectively, used in common.

That is to say, the optical system corresponding to a high density optical disc, such as a DVD, is made to be an infinitely conjugating system (hereinafter referred to simply as infinite system) using a light source of the wavelength of 650 nm while the objective lens thereof is optimally designed for the thickness of the high density optical disc substrate in the infinite system.

In the case that an optical disc of a comparatively low density having a different substrate thickness in comparison with a DVD, such as a CD or a CD-R, is recorded or reproduced, the optical system is made to be a finitely conjugating system (hereinafter referred to as a finite system) using a light source of the wavelength of 780 nm wherein an excellent signal recording and reproduction characteristic can be gained by canceling the spherical aberration caused by differences in the thickness of the substrate.

Here, an aberration due to an error in manufacturing or assembly usually exists in an optical system. Third order aberrations such as coma aberration, astigmatism and spherical aberration mainly affect the recording and reproduction of information to the greatest degree and, in general, a skew adjustment where the angle of the optical axis of the objective lens is varied is carried out in order to correct the coma aberration from among the above.

The shorter the wavelength is the smaller the amounts of these aberrations need to be and, in general, the higher the recording density of an optical disc is the shorter the wavelength used becomes. Accordingly, in an optical head that carries out recording and reproduction of optical discs, of which the thickness of the substrates or the recording densities differ, by using a plurality of light sources , the skew angle of the objective lens must be adjusted for an optical disc of which the density is relatively high. In this case , it becomes a problem in that these aberrations do not necessarily allow optimal conditions for recording and reproduction of an optical disc of which the density is relatively low.

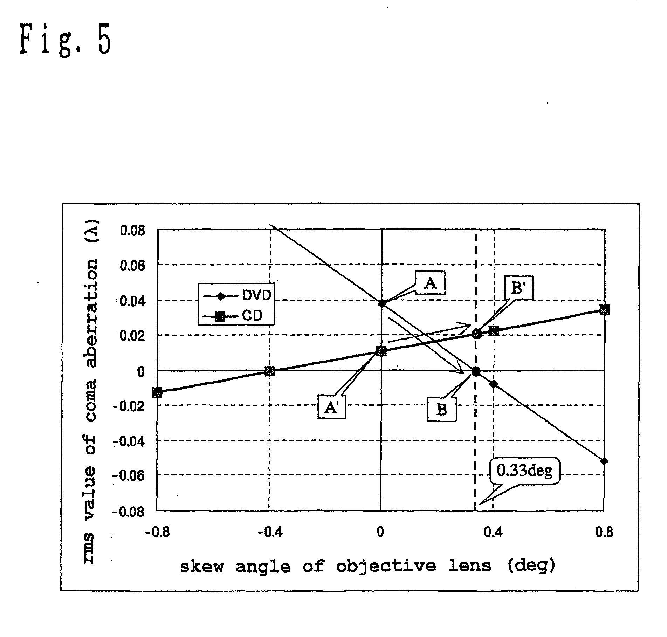

This situation is described in reference to Fig 5. Fig 5 shows an optical system wherein a DVD (substrate thickness of 0.6 mm) is assumed as a high density optical information recording medium and a CD (substrate thickness of 1.2 mm) is assumed as low density optical information recordingmedium. That is to say, the relationships between the skew angle and the coma aberration on the recording surface of the DVD disc and of the CD disc are shown in the case where a coma aberration exists in the objective lens.

Here, the vertical axis indicates the rms value of the aberration normalized with the light source wavelength and the rms value of the coma aberration which exists in the objective lens is 0.035 λ1 (λ1 is the light source wavelength corresponding to the DVD). This is a value that can occur as an aberration due to a manufacturing error. All of the values of the aberrations are described as rms values in the following.

In the case that the objective lens does not tilt relative to the optical axis, that is to say, in the case that the skew angle is 0 degrees, the coma aberration on the disc recording surface of the DVD is equal to the coma aberration of the objective lens. This is shown by dot A in Fig 5.

When the skew angle of the objective lens is changed from this condition, the coma aberration can be reduced to approximately 0. The skew angle of the objective lens at this time is approximately 0.33 degrees. This is shown by dot B in Fig 5.

Contrarily, the value of the coma aberration of the CD is 0.011 λ2 (λ2 is a light source wavelength corresponding to the CD) before the skew adjustment while it increases to 0.021 λ2 after the skew adjustment. This is shown as the increase from dot A' to dot B' in Fig 5 and it can be seen that the increase and the reduction in the coma aberration are opposite for the DVD and for the CD with respect to the skew angle of the objective lens.

The value 0.021 λ2 of the coma aberration of the CD after the skew adjustment corresponds to the tilt angle of 0.3 degrees of the disc. Accordingly, a difference of 0.3 degrees occurs in the disc tilt angle, between the DVD and the CD, wherein the j itter becomes of the minimum. This difference is hereinafter referred to as a tilt difference.

Here, in an optical head and an optical disc apparatus , the systems are usually designed to provide a permissible error in other tilt factors such as a manufacturing or assembly error or disc warp and there is the problem that in the case that a tilt difference occurs due to the skew adjustment in addition to the above, which becomes the size of approximately 0.3 degrees, the configuration of the optical disc apparatus becomes difficult with respect to the recording and reproduction of the CD.

### Disclosure of the Invention

Considering the problem of the above described optical head according to the prior art, the object of the present invention is to provide an optical head which optimally adjusts the skew angle of the objective lens relative to the high density optical information recording medium and, at the same time, can reduce the tilt difference between the optical system used for the relatively low density optical information recording medium, which is greater in substrate thickness, and that used for the high density optical information recording medium.

The present application is an optical head for converging a light flux emitted from a light source onto an information recording surface of an optical information recording medium via a transparent substrate of the medium and, thereby, recording information on said information recording surface or reproducing information from said information recording surface, the optical head comprising:
a first light path for converging a light flux from a first light source of which the wavelength is λ1 onto a first optical information recording medium of which the substrate thickness is t1: and a second light path for converging a light flux from a second light source of which the wavelength is λ2 (where λ1 < λ2) onto a second optical disc of which the substrate thickness is t2 (where t1 < t2), wherein
said first and second light paths share the same objective lens,
a skew adjustment is carried out on said objective lens so that the coma aberration of said first optical information recording medium becomes essentially 0,
said second light path is configured as a finite conjugating system, and
the position of said second light source in the optical axis direction is set on the side that is farther away from said objective lens than from the predetermined position where the rms value of the wave front aberration on the information recording surface of said second optical information recording medium becomes of the minimum.

### Brief Description of the Drawings

Fig 1 is a configuration diagram of an optical system according to the first embodiment of the present invention;
Fig 2 is a graph showing the relationships between the skew angle of the objective lens and the coma aberration according to the first embodiment of the present invention;
Fig 3 is a graph showing the relationships between the position in the direction of the optical axis of the light source and the coma aberration as well as the tilt difference at the time of skew adjustment according to the first embodiment of the present invention;
Fig 4 is a graph showing the relationships between the skew angle of the objective lens and the coma aberration according to the second embodiment of the present invention ; and
Fig 5 is a graph showing the skew angle of the objective lens and the coma aberration in an optical system according to a prior art.

### (Description of the Numerals)

- 11: first light source
- 12: beam splitter
- 13: condensing lens
- 14: objective lens
- 15: first optical disc
- 16: information recording surface of first optical disc
- 17: first light spot
- 21: second light source
- 24: aperture limitation means
- 25: second optical disc
- 26: information recording surface of second optical disc
- 27: second light spot

### Best Mode for Carrying Out the Invention

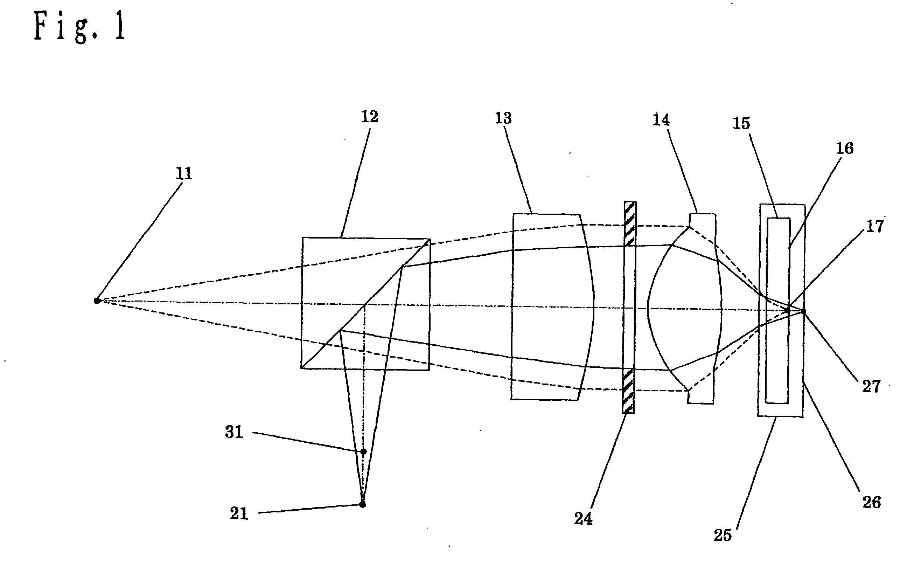

In the following, the embodiments of the present invention are described in reference to Figs 1 to 4.

### (Embodiment 1)

Fig 1 shows a configuration of an optical head wherein a DVD (substrate thickness of 0.6 mm) is assumed as a high density optical information recording medium and a CD (substrate thickness of 1.2 mm) is assumed as a low density optical information recording medium. Here, for the purposes of simplicity, the description concerning the detection optical system for detecting light reflected from the disc is omitted.

In Fig 1 a light flux emitted from a light source 11 of a wavelength of 650 nm becomes an approximately parallel light flux by means of a condensing lens 13 via a beam splitter 12 so as to enter into an objective lens 14 and to focus an image as a light spot 17 on an information recording surface 16 of an optical disc 15.

At this time, the NA on the side of the optical disc 15 is 0.6 and the objective lens 14 is designed so that the best performance can be gained with respect to this optical system. For example, it is designed so that the wave front aberration becomes essentially 0.

In addition, a light flux emitted from a light source 21 of a wavelength of 780 nm becomes divergent light by means of the condensing lens 12 and enters the objective lens 14 after being narrowed into an appropriate diameter of light flux by an aperture limitation means 24 via the beam splitter 13 so as to focus an image as a light spot 27 on an information recording surface 26 of an optical disc 25.

At this time, the NA on the side of the optical disc 25 is 0.45 and the aperture limitation means 24, which is configured of an appropriate means, carries out a narrowing function only on the light flux from the light source 21 while not affecting a light flux from the light source 11.

Though the light source 21 is conventionally placed at a position 31 of the light source so that the wave front aberration on the disc recording surface of a CD becomes of the minimum, it is installed on the side away from the objective lens 15 from the position 31 in the present invention.

Concerning the objective lens 15, the skew adjustment is carried out the coma aberration of the light spot 17 of the DVD becomes essentially 0.

The operation of the optical head configured in the above manner is described in the following.

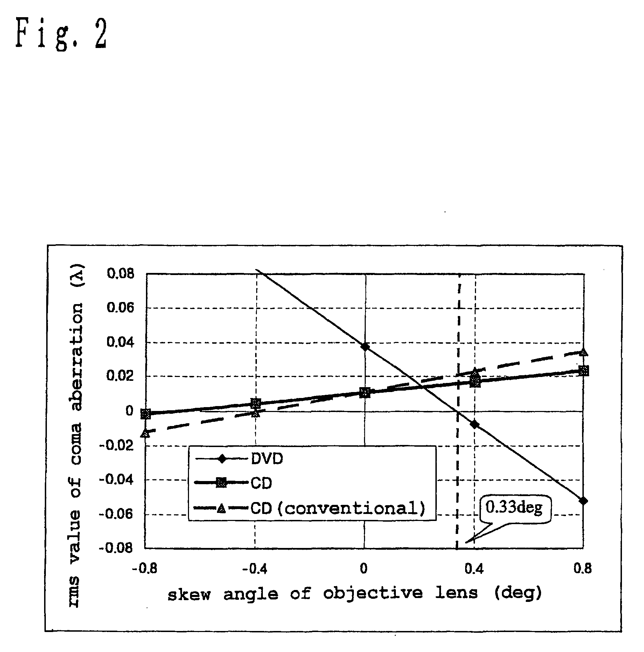

Fig 2 is a graph showing the relationships between the lens skew angle and the coma aberrations on the recording surface of the DVD as well as on the recording surface of the CD in the case that the coma aberrations exist in the objective lens of the optical system of Fig 1. Here, the vertical axis indicates the value of the aberration normalized by the light source wavelength wherein the coma aberration that exists in the objective lens is 0.035 λ 1. This is the value which may occur as an aberration due to a manufacturing error. In addition, the coma aberration of the case where the light source 21 is at the position 31 is also shown.

In Fig 2, in the case that the skew angle of the objective lens is 0 degrees, though the coma aberration of the CD becomes 0.011 λ2 in the same manner as the case of a prior art, the degree of the change of the coma aberration with respect to the skew angle is smaller than that of the case where the light source 21 is at the position 31 so that the slope of the graph becomes smaller.

Then, in the case that the skew adjustment is carried out so that the coma aberration of the DVD becomes 0, the coma aberration of the CD is 0.016 λ2. Though this value has become larger than the value before the skew adjustment, it has become smaller than the value 0.021 λ2 of the case where the light source 21 is placed at the position 31, that is to say, the case of the prior art and the disc tilt for canceling this is 0.24 degrees in comparison with 0.31 degrees of the prior art.

This means that the tilt difference between the DVD and the CD has been reduced in comparison with that of the prior art.

In this manner, it can be seen that the tilt difference caused by the objective lens skew is reduced when the light source 21 is moved from the wave front aberration minimum position 31 to the side away from the objective lens in the optical system for the CD.

This is theoretically analyzed as follows.

The principle herein is described. The coma aberration, which changes in accordance with the objective lens skew, is the sum of the coma aberration due to the inclination of the central axis of the objective lens with respect to a line perpendicular to the disc and the coma aberration caused by the light source becoming shifted from the central axis of the objective lens, from the viewpoint of the objective lens. The former is referred to as a tilt coma aberration and the latter is referred to as an off-axis coma aberration. As is well known, the further the optical system is out of the sine conditions , the bigger the off-axis coma aberration becomes.

In the case of the DVD, since the objective lens is designed so as to satisfy the sine condition, the off-axis coma aberration hardly occurs. Therefore, the skew adjustment is carried out where the objective lens is tilted so that a tilt coma aberration, of which the sign is opposite to that of the coma aberration that exists in the objective lens , occurs and, thereby, the coma aberration is cancelled. Contrarily, for the CD, in the case that the light source 21 is at the position 31 of the minimum wave front aberration, the sine condition is not satisfied and thereby the off-axis coma aberration occurs in addition to the tilt coma aberration. The off-axis coma aberration is of the opposite sign to the tilt coma aberration and is of the same sign as the coma aberration of the objective lens and, therefore, the amount of off-axis coma aberration with respect to the same skew angle is larger than that of the tilt coma aberration in absolute value so that a coma aberration that is larger than the coma aberration in the system for the CD of the objective lens remains even after the skew adjustment is carried out in the system for the DVD. Since the deviation from the sine condition for the CD is reduced as the light source moves away from the position 31, the off-axis coma aberration due to the objective lens skew is also reduced. Therefore, the sum of the coma aberration of the objective lens at the time of skewing, the tilt coma aberration and the off-axis coma aberration is reduced in comparison with the case where the light source for the CD is at the position 31 so that the tilt residual is reduced.

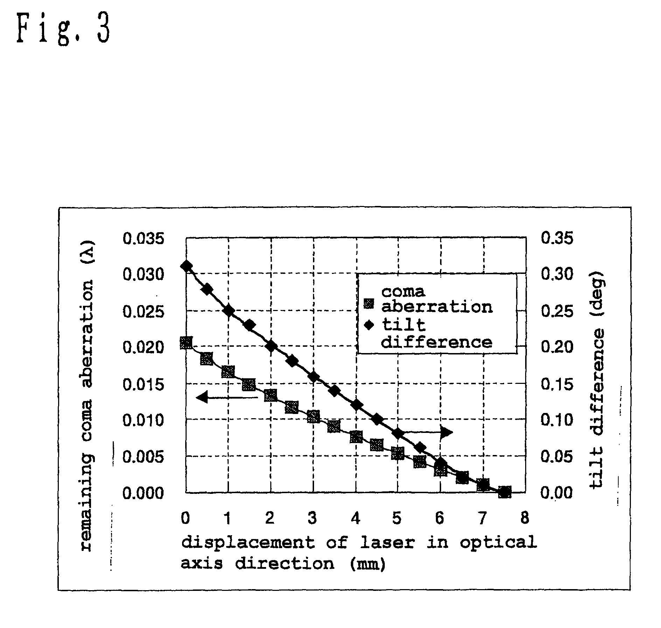

Fig 3 is a graph showing the relationships between the displacement amount of the light source 21 from the position 31 and the remaining coma aberration of the CD after the skew adjustment as well as the resulting tilt difference in the optical system of Fig 1. Here, the focal distance of the objective lens 14 is 3.3 mm, the focal distance of the condensing lens 13 is 20 mm and the NA of the optical disc 26 side is always kept at 0.45 by varying the aperture diameter of the aperture limitation means 24 in accordance with the position of the light source 21.

It can be seen from Fig 3 that the farther away is the light source 21 from the position 31, the more the remaining coma aberration and the tilt difference are reduced. Accordingly, the tilt difference can be controlled at the value that can be tolerated, or less, in the configuration of the optical disc apparatus by appropriately selecting the position of the light source 21 in the optical access direction.

### (Embodiment 2)

Judging from the above described principle of the occurrence of the tilt coma aberration and the off-axis coma aberration, it is assumed that there is a case where the absolute values of the tilt coma aberration and the off-axis coma aberration become equal, in relation to the same skew angle, when the light source for the CD is at a certain position since the farther away is the light source from the position 31, the more the off-axis coma aberration is reduced. At this time, the tilt coma aberration and the off-axis coma aberration always cancel each other regardless of the size of the skew angle and, therefore, the sum of the coma aberrations does not change at all. In addition, in the case that the light source moves farther away beyond this position, the absolute value of the tilt coma aberration becomes larger than that of the off-axis coma aberration in relation to the same skew angle and, thereby, the amount of the remaining coma aberration must be reduced.

The coma aberration for the CD is approximately 0.011 λ2 when the skew angle of the objective lens 15 is 0 degrees in Fig 2, which is approximately equal to the coma aberration when the position of the light source 21 is approximately 2.9 mm away from the position 31 in Fig 3. At this time, the system is considered to be in the condition where the coma aberration does not change, regardless of the skew angle. Considering this point, Embodiment 2 is gained by installing the light source 21 at a position farther away from this position than from the objective lens 1.

The operation of the optical head of this case is described in the following.

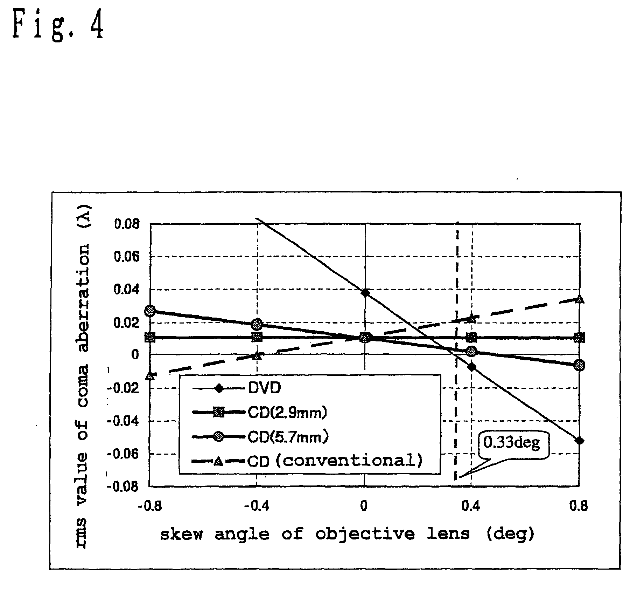

Fig 4 is a graph showing the relationships between the lens skew angle and the coma aberrations on the recording surfaces of the DVD and the CD in the case where the position of the light source 21 is 2.9 mm as well as 5.7 mm away from the position 31.

In Fig 4, in the case that the distance of the light source 21 from the position 31 is approximately 2.9 mm, the coma aberration for the CD does not vary and is always constant, even in the case where the skew angle of the objective lens 15 changes. Hereinafter this is referred to as skew free.

This means that the coma aberration and the tilt difference for the CD do not, essentially, increase when in the skew free condition even in the case that the skew adjustment is optimally carried out for the DVD. In the case of the skew free condition, the remaining coma aberration for the CD is constant at approximately 0.011 λ2 and the resulting tilt difference is 0.16 degrees. In general, it is possible to configure an optical disc apparatus with a tilt difference of this extent. In addition, in the case that the light source 21 is on the side farther away from the objective lens 15 than from the skew free position, for example in the case that the distance of the light source 21 from the position 31 is approximately 5.7 mm, the coma aberration for the CD is reduced to 0.002 λ as shown in Fig 4. The resultant tilt difference can almost be ignored.

Here, though in the case that the position of the light source 21 is made to be on the side farther away from the skew free position a configuration with less tilt difference can be gained, placing the light source 21 at the skew free position has the following advantages.

Firstly, the optical head can be made compact. It is clear that the farther away is the position of the light source 21, the larger the dimensions of the optical head become. Contrarily, the skew free position provides the arrangement where the optical head can be made most compact within the range where the tilt difference can be tolerated.

Secondly, it is advantageous from the viewpoint of the driving stroke of an actuator that drives the objective lens 15. When the light source 21 is placed at the position 31 of the minimum wave front aberration, the working distance of the objective lens 15 in the case that the CD is recorded or reproduced becomes approximately 0.2 mm shorter than that of the case of the DVD. Accordingly, the driving stroke of the actuator in focal distance is designed by taking the difference of these working distances into consideration.

On the other hand, in the case that the light source 21 is placed at the position where the optical system for the CD becomes an infinite system, the working distance for the CD becomes 0.35 mm to 0.4 mm shorter than that for the DVD and further expansion of the driving stroke of the actuator is necessary.

Contrarily, in the case of the skew free position, the difference of the working distances between the CD and the DVD is approximately 0.28 mm and it is not necessary to expand the driving stroke as in the case of an infinite system. In particular, in the case where it is strongly required to make the optical head thinner, such as in an optical disc apparatus for being built in a laptop personal computer or for portable applications, it is difficult to expand the driving stroke in the focal direction where the difference of the working distances is desired to be as small as possible and, therefore, there is the great advantage in the skew free arrangement for such applications.

Here, though the position of the light source 21 is described as the skew free position in the present embodiment, a small shift of the light source from this position does not cause a great change in the relationships between the skew angle and the coma aberration on the one hand, as well as the tilt difference on the other and, therefore, a small change in the position of the light source within the tolerance of the tilt difference due to the conditions of optical head design constraints is, of course, acceptable.

As described above, according to the present invention since the light source 21 is placed away from the position 31 where the wave front aberration becomes of the minimum, the spherical aberration increases. For example, in the optical system shown in this embodiment, when the distance of the light source 21 from the position 31 is 5.7 mm, an infinite system is provided. Though the remaining coma aberration after the skew adjustment of this case is as small as 0.005 λ2 and the resultant tilt difference becomes 0.05 degrees, which is an amount that can also be ignored, the spherical aberration becomes 0.15 λ2, which greatly exceeds the Marechal's criterion 0.07 λ2 that is usually used as a benchmark. In such a case a variety of methods are purposed in order to carry out good recording and reproduction of the CD. For example, there is the method as shown in the Japanese unexamined patent publication H10(1998)-208281. This makes a good recording and reproduction possible while an infinite optical system is provided for both the DVD and the CD by correcting the aberration of the central part of the objective lens for the DVD so that a light spot of the minimum aberration is formed on the optical disc of which the substrate thickness is 0.84 mm to 1.2 mm. The usage of such a method does not cause a problem even in the case that the spherical aberration increases by placing the light source 21 farther away than the position 31.

In addition, though the first optical information recording medium according to the present invention is the DVD in the above described embodiment and the second optical information recording medium is the CD in the above described embodiment, the present invention is not limited these but, rather, may be combinations of DVD and PD or DVD and LD (laser disc) and, in conclusion, the present invention is applicable to two types of optical information recording media which are in the relationship where the thickness of the substrate is relatively less and the recording density is higher.

### Industrial Applicability

As described above, according to the present invention, concerning an optical head that has a plurality of light sources of differing wavelengths and that corresponds to optical information recording media of differing substrate thickness and of differing recording densities,
it becomes possible to gain an optical head that can control, within the tolerance, the tilt difference due to the coma aberration caused on the recording surface of the optical information recording medium of a relatively low density in the case that a skew adjustment is optimally carried out on the obj ective lens for the optical information recording medium of a relatively high density.

In addition, the present invention makes it possible to provide an optical system that is advantageous for making the optical head more compact, or thinner, by limiting to the minimum the increase of the dimensions of the optical system while controlling the tilt difference and by limiting to the minimum the increase of the difference in working distance of the objective lens with respect to a high density optical information recording medium and to a low density optical information recording medium.

## Claims

1. An optical head for converging a light flux emitted from a light source onto an information recording surface of an optical information recording medium via a transparent substrate of the medium and, thereby, recording information on said information recording surface or reproducing information from said information recording surface, the optical head comprising:
a first light path for converging a light flux from a first light source of which the wavelength is λ1 onto a first optical information recording medium of which the substrate thickness is t1: and a second light path for converging a light flux from a second light source of which the wavelength is λ2 (where λ1 < λ2) onto a second optical disc of which the substrate thickness is t2 (where t1 < t2), wherein
said first and second light paths share the same objective lens,
a skew adjustment is carried out on said objective lens so that the coma aberration of said first optical information recording medium becomes essentially 0,
said second light path is configured as a finite conjugating system, and
the position of said second light source in the optical axis direction is set on the side that is farther away from said objective lens than from the predetermined position where the rms value of the wave front aberration on the information recording surface of said second optical information recording medium becomes of the minimum.

2. An optical head according to Claim 1,
**characterized in that** the position of said second light source in the optical axis direction is set between said predetermined position and the position where said second light path becomes an infinite system.

3. An optical head according to Claim 1 or 2,
**characterized in that** the position of said second light source in the optical axis direction is set at a position where the rms value of the coma aberration of said second light path does not change, even in the case that the skew angle of said objective lens changes.

4. An optical head according to Claim 1,
**characterized in that** said wavelengths λ1 and λ2 and said substrate thickness t1 and t2 are, respectively, as follows :
620 nm < λ1 < 680 nm
740 nm < λ2 < 820 nm
0.4 mm < t1 < 0.8 mm
1.0 mm < t2 < 1.5 mm.

5. An optical head according to Claim 1 or 2,
**characterized in that** said first optical information recording medium is a DVD, said wavelength λ1 is 650 nm, said second optical information recording medium is a CD and said wavelength λ2 is 780 nm.
